# EUROPÄISCHE PATENTSCHRIFT

(11) **EP 2 011 129 B1**
(45) Veröffentlichungstag und Bekanntmachung des Hinweises auf die Patenterteilung: **29.09.2010**
(21) Anmeldenummer: 07704612.6
(22) Anmeldetag: 16.02.2007
(51) Int. Cl.: H01F 7/06

(54) **MAGNETBAUGRUPPE FÜR EIN MAGNETVENTIL**
MAGNET ASSEMBLY FOR A MAGNET VALVE
MODULE MAGNÉTIQUE POUR UNE SOUPAPE MAGNÉTIQUE

(30) Priorität: 13.04.2006 DE 102006017451
(43) Veröffentlichungstag der Anmeldung: 07.01.2009
(73) Patentinhaber: Robert Bosch GmbH, 70442 Stuttgart (DE)
(72) Erfinder: GREIF, Hubert, 71706 Markgroeningen (DE); HAEGELE, Timo, 74405 Gaildorf (DE); PLUESCHKE, Stefan, 73614 Schorndorf (DE)
(86) Internationale Anmeldenummer: PCT/EP2007/051489
(87) Internationale Veröffentlichungsnummer: WO 2007/118723

(56) Entgegenhaltungen:
- EP-A1- 0 302 250
- WO-A-99/31678
- WO-A-02/086918
- DE-A1- 4 405 657
- DE-A1- 10 334 785
- DE-A1- 19 712 591
- DE-U1-202004 006 156
- US-B1- 6 515 565

## Beschreibung

### Stand der Technik

Die Erfindung betrifft eine Magnetbaugruppe für ein Magnetventil gemäß dem Oberbegriff des Anspruches 1.

Ein Magnetventil wird zum Beispiel eingesetzt, um die Öffnungs- und Schließbewegung eines Einspritzventilgliedes eines Kraftstoffinjektors zu steuern. Das Magnetventil umfasst dabei eine Magnetbaugruppe.

Durch die DE 197 12 591 A1 ist eine Magnetbaugruppe für ein Magnetventil bekannt. Diese enthält einen Innenpol und einen Außenpol sowie eine Spule. Die Spule ist zwischen dem Innenpol und dem Außenpol angeordnet und umgibt den Innenpol. Die elektrische Isolierung zwischen der Spule und dem Innenpol ist in der vereinfachten Darstelllung nicht detailliert und somit offensichtlich standardmäßig ausgeführt. Dies führt zu einem aus elektrisch isolierenden Material hergestellten Spulenträger, in dem die Spule aufgenommen ist. Durch den Spulenträger ist die Magnetbaugruppe in unerwünschter Weise radial vergrößert.

Nachteil der Magnetbaugruppe, wie sie aus dem Stand der Technik bekannt ist, ist insbesondere für den Einsatz in Kraftstoffinjektoren deren großer Bauraum. Die Magnetbaugruppe ist für das Magnetventil durchmesserbestimmend. Zudem ergibt sich aufgrund des aus isolierendem Material gefertigten Spulenträgers eine begrenzte Wärmeleitfähigkeit. Insbesondere bei schnell schaltenden Magnetventilen kann dies zu einer Überhitzung der Spule führen. Zudem ist aufgrund des gewünschten geringen Bauraumes und der Abmessungen des Spulenträgers nur eine geringe Windungszahl möglich. Eine Erhöhung der Windungszahl würde einen größeren Durchmesser der Spule erfordern und damit zu einer größeren Magnetbaugruppe führen.

### Offenbarung der Erfindung

Bei einer erfindungsgemäß ausgebildeten Magnetbaugruppe für ein Magnetventil, die einen Innenpol, einen Außenpol und eine Spule umfasst, wobei die Spule zwischen dem Innen- und dem Außenpol angeordnet ist, wird die Spule direkt auf den Innenpol gewickelt Durch das Wickeln der Spule direkt auf den Innenpol, wird der Bauraum, welchen bei den aus dem Stand der Technik bekannten Lösungen der Spulenträger einnimmt, eingespart. Hierdurch kann der Bauraum der Magnetbaugruppe reduziert werden. Zudem ist es zur Vergrößerung der Magnetkraft möglich, bei gleichem Bauraum eine größere Anzahl an Wicklungen aufzubringen.

Um zu vermeiden, dass ein Kurzschluss entsteht, ist dann, wenn der Innenpol aus einem elektrisch leitfähigem Material gefertigt ist, der Innenpol an der der Spule zuweisenden Seite mit einer elektrisch isolierenden Beschichtung beschichtet. Die Beschichtung ist vorzugsweise eine Parylene-Beschichtung. Hierbei handelt es sich um eine inerte, hydrophobe, optisch transparente, polymere Beschichtung, die eine sehr gute elektrische Isolation mit hoher Spannungsfestigkeit und niedriger Dielektrizitätskonstante gewährleistet. Die Beschichtung ist bereits ab einer Schichtdicke von 0,2 µm mikroporenfrei. Die Beschichtung wird im Allgemeinen im Vakuum durch Kondensation aus der Gasphase aufgetragen. Hierdurch werden auch Bereiche und Strukturen erreicht, die mit flüssigkeitsbasierten Verfahren nicht beschichtbar sind. Die Schichtdicke, die erfindungsgemäß auf den Innenpol aufgetragen wird, beträgt vorzugsweise ungefähr 10 µm. Die Spule wird dann direkt auf die Beschichtung des Innenpols aufgewickelt. Aufgrund der geringen Dicke der Beschichtung kann die beim Schalten des Magnetventils entstehende Wärme über den Innenpol abgeführt werden.

An Innenpol ist vorzugsweise eine nach außen ragende Erweiterung ausgebildet, die in den Außenpol eingepresst wird. Der Außendurchmesser der nach außen ragenden Erweiterung ist dabei größer als der Außendurchmesser der Spule, so dass bei montierter Magnetbaugruppe zwischen der Spule und dem Außenpol ein Spalt ausgebildet ist. Hierdurch wird vermieden, dass zwischen der Spule und dem Außenpol ein Kurzschluss entsteht.

Um die Spule mit einer Spannungsquelle zu verbinden, sind an der Spule vorzugsweise Kontaktfahnen ausgebildet. Damit die Kontaktfahnen mit der Spannungsquelle verbunden werden können, ist in einer bevorzugten Ausführungsform in der nach außen ragenden Erweiterung am Innenpol eine Aussparung ausgebildet, durch welche die Kontaktfahnen geführt sind. Hierbei ist es möglich, für jede Kontaktfahne eine einzelne Aussparung vorzusehen oder alle Kontaktfahnen durch die gleiche Aussparung zu führen. Es ist lediglich darauf zu achten, dass die Kontaktfahnen nicht in Kontakt mit dem Innenpol, dem Außenpol oder miteinander kommen.

Die Kontaktfahnen werden vorzugsweise jeweils mit einem Kontaktstift verbunden, über den die Magnetbaugruppe mit der Spannungsquelle kontaktiert werden kann. Die Kontaktstifte sind dabei vorzugsweise elektrisch isoliert voneinander in einem Stifthalter aufgenommen, der in der Aussparung der nach außen ragenden Erweiterung des Innenpols aufgenommen ist. Die elektrische Isolation wird vorzugsweise dadurch erreicht, dass der Stifthalter aus einem elektrisch isolierenden Material gefertigt ist. Wenn der Stifthalter nicht aus einem elektrisch isolierenden Material gefertigt ist, so ist dieser vorzugsweise mit einer elektrisch isolierenden Beschichtung versehen.

Die erfindungsgemäß ausgebildete Magnetbaugruppe wird vorzugsweise zur Betätigung eines Schließelementes in einem Magnetventil verwendet. In einer besonders bevorzugten Ausführungsform wird das Magnetventil mit der erfindungsgemäß ausgebildeten Magnetbaugruppe in einem Kraftstoffinjektor eingesetzt.

### Zeichnung

Anhand der Zeichnung wird die Erfindung nachstehend näher erläutert.

Es zeigt:
- Figur 1: einen Schnitt durch eine Magnetbaugruppe gemäß dem Stand der Technik,
- Figur 2: eine perspektivische Ansicht eines Innenpols,
- Figur 3: einen Schnitt durch eine erfindungsgemäß ausgebildete Magnetbaugruppe,
- Figur 4: eine Draufsicht auf einen Innenpol mit Spule und Kontaktstiften,
- Figur 5: eine perspektivische Detailansicht des elektrischen Anschlusses der Spule,
- Figur 6: eine perspektivische Darstellung eines bewickelten Innenpols mit Kontaktstiften,
- Figur 7: eine perspektivische Darstellung einer montierten Magnetbaugruppe.

### Ausführungsbeispiele

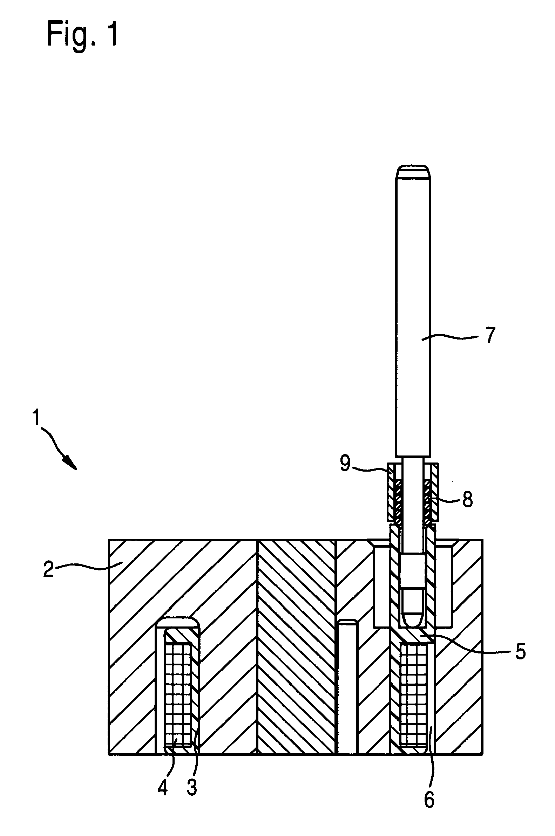

Figur 1 zeigt eine Magnetbaugruppe gemäß dem Stand der Technik.

Eine Magnetbaugruppe 1 gemäß dem Stand der Technik umfasst einen Magnetkern 2, in welchem eine Nut 3 ausgebildet ist. In der Nut 3 ist eine Spule 4 aufgenommen, die auf einen Spulenträger 5 aufgewickelt ist. Der Spulenträger 5 ist dabei vorzugsweise aus einem elektrisch isolierenden Material gefertigt, damit keine elektrische Verbindung zwischen der Spule 4 und dem Magnetkern 2 entsteht. Am äußeren Umfang ist zwischen der Spule 4 und der Wandung der Nut 3 ein Spalt 6 ausgebildet. Durch den Spalt wird vermieden, dass ein Kurzschluss zwischen der Spule 4 und dem Magnetkern 2 entsteht. Die Spannungsversorgung der Spule 4 erfolgt über Kontaktstifte 7. Die Kontaktstifte 7 sind mit Hilfe von Kontaktfahnen 8, die jeweils um den Kontaktstift 7 gewickelt sind, mit der Spule 4 verbunden. Um die Wicklung der Kontaktfahne 8 um den Kontaktstift 7 ist eine Schweißhülse 9 angeordnet. Durch die Schweißhülse 9 wird vermieden, dass sich die Kontaktfahne 8 vom Kontaktstift 7 löst.

Durch den Spulenträger 5, auf welchen die Spule 4 aufgewickelt ist, wird zusätzlicher Bauraum in der Magnetbaugruppe 1 benötigt. Hierdurch wird der notwendige Durchmesser der Magnetbaugruppe 1 vergrößert. Dies ist insbesondere dann von Nachteil, wenn Magnetventile eingesetzt werden müssen, deren Bauraum möglichst klein ist.

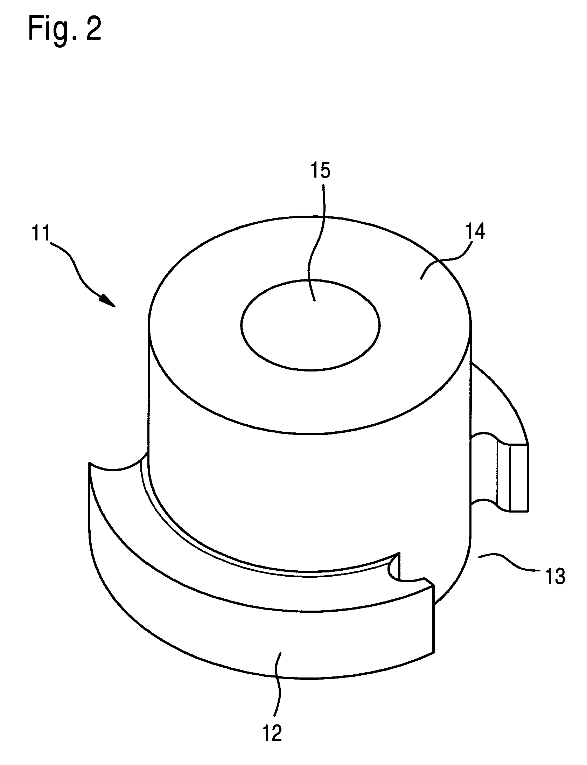

In Figur 2 ist ein erfindungsgemäß ausgebildeter Innenpol perspektivisch dargestellt.

An einem erfindungsgemäß ausgebildeten Innenpol 11 ist eine nach außen ragende Erweiterung 12 ausgebildet. In der nach außen ragenden Erweiterung 12 ist einen Aussparung 13 ausgebildet. Weiterhin umfasst der Innenpol 11 einen zylinderförmigen Körper 14, auf welchen eine in Figur 2 nicht dargestellte Spule aufgewickelt wird. Um zu vermeiden, dass zwischen der Spule und dem zylinderförmigen Körper 14 ein Kurzschluss entsteht, wird der zylinderförmige Körper 14 beschichtet. Die Beschichtung erfolgt vorzugsweise mit Parylene. Hierdurch ist bereits eine Beschichtung mit einer Dicke von ungefähr 10 µm ausreichend, um eine ausreichende elektrische Isolation zu gewährleisten. Aufgrund der geringen Dicke der Beschichtung ist die thermische Isolationswirkung jedoch nur sehr gering, so dass die Wärme, die im Betrieb der Magnetbaugruppe in der Spule erzeugt wird über den Innenpol abgeführt werden kann. Im Inneren des zylinderförmigen Körpers 14 ist eine Bohrung 15 vorgesehen, in welcher zum Beispiel eine Ventilfeder geführt werden kann, wenn die Magnetbaugruppe zur Betätigung eines Magnetventils verwendet wird.

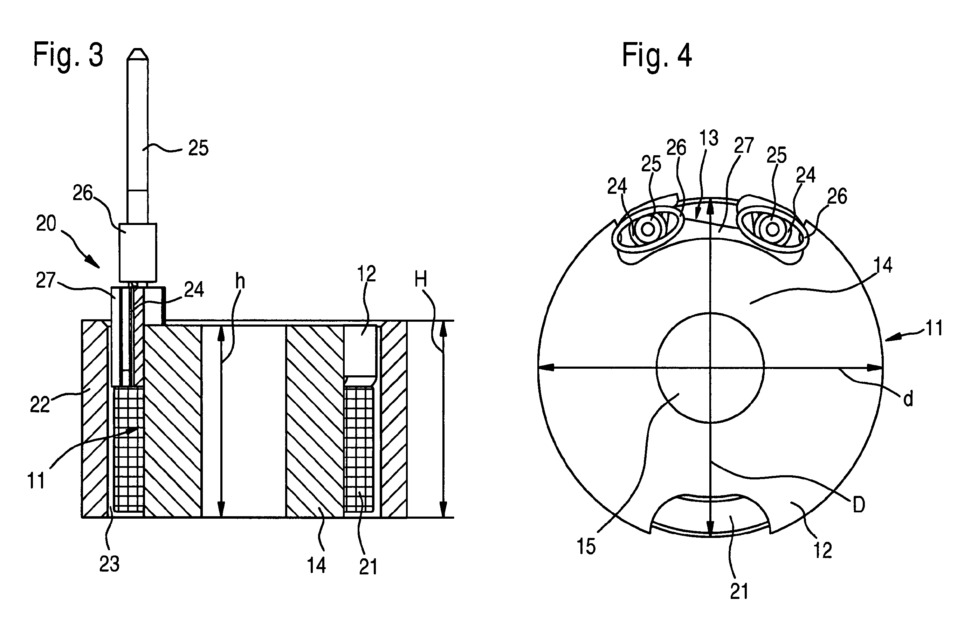

Figur 3 zeigt einen Schnitt durch eine erfindungsgemäß ausgebildete Magnetbaugruppe.

Eine erfindungsgemäß ausgebildete Magnetbaugruppe 20 umfasst den Innenpol 11, auf dessen beschichteten zylinderförmigen Körper 14 eine Spule 21 aufgewickelt ist. Der Durchmesser der Spule 21 ist dabei kleiner als der Außendurchmesser der nach außen ragenden Erweiterung 12. Auf diese Weise wird nach dem Aufpressen eines Außenpols 22 auf die nach außen ragende Erweiterung 12 ein Spalt 23 zwischen der Spule 21 und dem Außenpol 22 ausgebildet.

Die Spannungsversorgung der Spule 21 erfolgt über eine Kontaktfahne 24, welche mit einem Kontaktstift 25 verbunden ist. Zur Verbindung der Kontaktfahne 24 mit dem Kontaktstift 25 wird die Kontaktfahne 24 um den Kontaktstift 25 gewickelt und anschließend mit einer Schweißhülse 26 umschlossen. Ein fester Sitz der Schweißhülse 26 wird dadurch erreicht, dass diese auf die Wicklung, mit der die Kontaktfahne 24 am Kontaktstift 25 befestigt ist, zum Beispiel durch Widerstandsschweißen befestigt wird. Es ist aber auch jede andere Art der Befestigung der Schweißhülse denkbar. So kann diese zum Beispiel auch durch Quetschen befestigt werden. Der Kontaktstift 25 ist in einem Stifthalter 27 aufgenommen. Um zu vermeiden, dass Strom vom Kontaktstift 25 zum Innenpol 11 oder zum Außenpol 22 fließen kann, ist der Stifthalter 27 vorzugsweise aus einem isolierenden Material gefertigt. Bevorzugtes Material ist Kunststoff. Es ist jedoch auch möglich, den Stifthalter 27 aus einem elektrisch leitfähigen Material zu bilden, welches dann mit einer isolierenden Beschichtung versehen wird.

In der in Figur 3 dargestellten Ausführungsform ist die Höhe h des Innenpols kleiner als die Höhe H des Außenpols. Hierdurch wird es ermöglicht, einen Restluftspalt zwischen dem zylinderförmigen Körper 14 des Innenpols 11 und einem hier nicht dargestellten Anker einzustellen, ohne dass die Gesamthöhe der Magnetbaugruppe größer wird als die Höhe H des Außenpols 22.

Figur 4 zeigt eine Draufsicht auf einen erfindungsgemäß ausgebildeten Innenpol mit Spule und Kontaktstiften.

In der in Figur 4 dargestellten Draufsicht ist zu sehen, dass der Außendurchmesser d der nach außen ragenden Erweiterung 12 des Innenpols 11 größer ist als der Außendurchmesser D der Spule 21. Die Breite des Spaltes 23 ergibt sich aus der Differenz zwischen dem Außendurchmesser d der nach außen ragenden Erweiterung 12 und dem Außendurchmesser D der Spule 21.

Weiterhin ist in der in Figur 4 dargestellten Draufsicht zu erkennen, dass zur Spannungsversorgung der Spule 21 zwei Kontaktstifte 25 vorgesehen sind. Die beiden Kontaktstifte 25 sind im Stifthalter 27 aufgenommen. Zur Kontaktierung der Spule 21 mit den Kontaktstiften 25 werden die Kontaktfahnen 24 um die Kontaktstifte 25 gewickelt und anschließend mit den Schweißhülsen 26 umschlossen. Die Schweißhülsen 26 werden zum Beispiel durch Widerstandsschweißen um die aufgewickelten Kontaktfahnen 24 geschweißt, um eine stabile Verbindung zu erzielen.

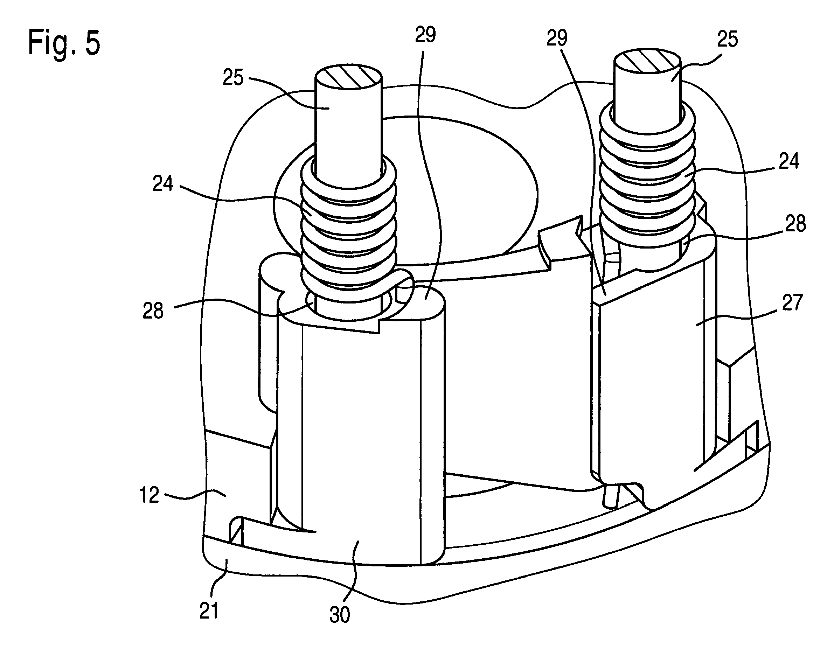

Figur 5 zeigt eine perspektivische Ansicht des Stifthalters mit Kontaktstiften und Kontaktfahnen.

Figur 5 ist entnehmbar, wie die Kontaktfahnen 24 um die Kontaktstifte 25 gewickelt sind. Durch das Umwickeln der Kontaktstifte 25 mit den Kontaktfahnen 24 werden diese vor der eigentlichen stoff- oder formschlüssigen Verbindung vorfixiert. Eine stabile elektrische Verbindung wird dann vorzugsweise durch Widerstandsschweißen erzielt.

In der hier dargestellten Ausführungsform sind die Kontaktstifte 25 in Aufnahmen 28 im Stifthalter 27 gehalten. Der Durchmesser der Aufnahmen 28 ist dabei kleiner als der Durchmesser der Kontaktstifte 25, so dass diese in der Aufnahme 28 verklemmt werden. An den Aufnahmen 28 sind Laschen 29 ausgebildet, in welchen die Kontaktstifte 25 geführt werden. Gleichzeitig dienen die Laschen 29 zur elektrischen Isolierung gegen den Außenpol 22.

Der Stifthalter 27 ist in der Aussparung 13 der nach außen ragenden Erweiterung 12 aufgenommen. Um den Innenpol 11 im Außenpol 22, der in Figur 5 nicht dargestellt ist, montieren zu können, ist darauf zu achten, dass die Außenfläche 30 maximal den gleichen Durchmesser aufweist wie die nach außen ragende Erweiterung 12.

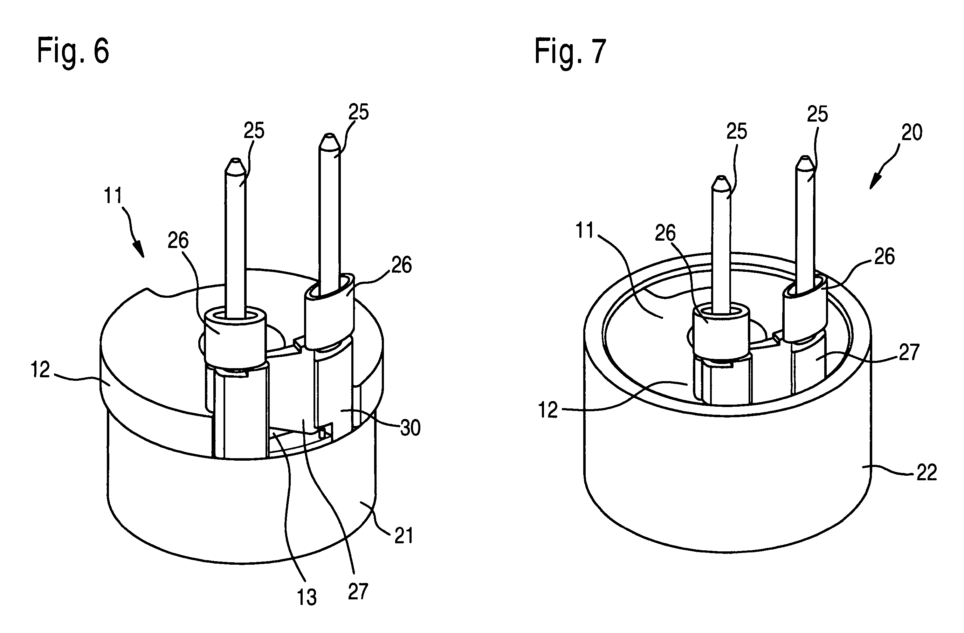

Figur 6 zeigt eine perspektivische Darstellung eines erfindungsgemäß ausgebildeten Innenpols mit Spule und Kontaktstiften.

In der in Figur 6 dargestellten perspektivischen Darstellung ist zu erkennen, dass die Außenfläche 30 des Stifthalters 27 die nach außen ragende Erweiterung 12 des Innenpols 11 nicht überragt. Ein Herausragen der Außenfläche 30 über den Außendurchmesser der Spule 21 im gleichen Maß wie die nach außen ragende Erweiterung 12 ist jedoch möglich.

In der in Figur 6 dargestellten Darstellung sind die um die Kontaktstifte 25 gewickelten Kontaktfahnen 24 von den Schweißhülsen 26 umschlossen. Wie Figur 6 zu entnehmen ist, werden die Schweißhülsen 26 über die Wicklungen der Kontaktfahnen 24 montiert, um so eine stabile Verbindung zu erzielen.

Figur 7 zeigt eine fertig montierte Magnetbaugruppe.

Bei der fertig montierten Magnetbaugruppe 20 ist der Innenpol 11, auf den die Spule 21 gewickelt ist, mit der nach außen ragenden Erweiterung 12 in den Außenpol 22 eingepresst. Durch das Einpressen der nach außen ragenden Erweiterung 12 in den Außenpol 22 wird eine stabile Verbindung erzielt.

Zur Herstellung der erfindungsgemäß ausgebildeten Magnetbaugruppe 20 wird vorzugsweise zunächst ein Innenpol 11 aus einem hoch permeablen, resistiven Material, vozugsweise einem weichmagnetischen Pulververbundwerkstoff durch Pressen gefertigt. In einem nächsten Schritt wird der Innenpol 11 mit einer elektrisch isolierenden Beschichtung versehen. Hierzu wird vorzugsweise Parylene verwendet. Nach dem Beschichten wird die nach außen ragende Erweiterung 12 auf ihren Außendurchmesser d geschliffen. Abschließend wird auf den zylinderförmigen Körper 14 des Innenpols 11 die Spule 21 gewickelt. Nach dem Wickeln der Spule wird diese mit den Kontaktstiften 25, die im Stifthalter 27 aufgenommen sind, kontaktiert.

Der Außenpol 22 wird in einem ersten Schritt am Innendurchmesser und den Anlage- und Anschlagflächen auf Passung zum Innenpol 11 geschliffen. Daran anschließend kann in einem weiteren Schritt die Anschlagfläche verchromt werden. Abschließend wird der Innenpol 11 in den Außenpol 22 eingepresst.

In einer bevorzugten Ausführungsform wird nach dem Zusammenfügen des Innenpols 11 mit Spule 21 und Kontaktstiften 25 mit dem Außenpol 22 die gesamte Magnetbaugruppe 20 mit einem Kunststoff, vorzugsweise einem Thermoplasten umspritzt oder mit einem Reaktionsharz umgossen.

## Patentansprüche

1. Magnetbaugruppe für ein Magnetventil, einen Innenpol (11) und einen Außenpol (22) sowie eine Spule (21) umfassend, wobei die Spule (21) zwischen dem Innenpol (11) und dem Außenpol (22) angeordnet ist, **dadurch gekennzeichnet, dass** die Spule (21) direkt auf den mit einer elektrisch isolierenden Beschichtung versehenen Innenpol (11) gewickelt ist.

2. Magnetbaugruppe nach Anspruch 2, **dadurch gekennzeichnet, dass** die Beschichtung eine Parylene-Beschichtung ist.

3. Magnetbaugruppe nach einem der Ansprüche 1 bis 2, **dadurch gekennzeichnet, dass** am Innenpol (11) eine nach außen ragende Erweiterung (12) ausgebildet ist, die in den Außenpol (22) eingepresst wird, so dass zwischen der Spule (21) und dem Außenpol (22) ein Spalt (23) ausgebildet ist.

4. Magnetbaugruppe nach Anspruch 3, **dadurch gekennzeichnet, dass** in der nach außen ragenden Erweiterung (12) am Innenpol (11) eine Aussparung (13) ausgebildet ist, in der mindestens eine Kontaktfahne (24) aufgenommen ist.

5. Magnetbaugruppe nach Anspruch 4, **dadurch gekennzeichnet, dass** die Kontaktfahnen (24) jeweils mit einem Kontaktstift (25) verbunden sind, über den die Magnetbaugruppe (20) mit einer Spannungsquelle kontaktiert werden kann.

6. Magnetbaugruppe nach Anspruch 5, **dadurch gekennzeichnet, dass** die Kontaktstifte (25) elektrisch isoliert voneinander in einem Stifthalter (27) aufgenommen sind, der in der Aussparung (13) der nach außen ragenden Erweiterung (12) aufgenommen ist.

7. Magnetbaugruppe nach Anspruch 6, **dadurch gekennzeichnet, dass** der Stifthalter (27) aus einem elektrisch isolierenden Material gefertigt ist.

8. Verwendung einer Magnetbaugruppe nach einem der Ansprüche 1 bis 7 zur Betätigung eines Schließelementes in einem Magnetventil.

9. Verwendung nach Anspruch 9, **dadurch gekennzeichnet, dass** das Magnetventil in einem Kraftstoffinjektor eingesetzt wird.

## Claims

1. Magnet assembly for a solenoid valve, comprising an internal pole (11) and an external pole (22) and also a coil (21), with the coil (21) being arranged between the internal pole (11) and the external pole (22), **characterized in that** the coil (21) is wound directly onto the internal pole (11) which is provided with an electrically insulating coating.

2. Magnet assembly according to Claim 1, **characterized in that** the coating is a Parylene coating.

3. Magnet assembly according to either of Claims 1 and 2, **characterized in that** an outwardly projecting extension (12) is formed on the internal pole (11), the said extension being pressed into the external pole (22) and therefore a gap (23) being formed between the coil (21) and the external pole (22).

4. Magnet assembly according to Claim 3, **characterized in that** a cutout (13) is formed in the outwardly projecting extension (12) on the internal pole (11), at least one contact lug (24) being accommodated in the said cutout.

5. Magnet assembly according to Claim 4, **characterized in that** the contact lugs (24) are each connected to a contact pin (25) by means of which a power source can make contact with the magnet assembly (20).

6. Magnet assembly according to Claim 5, **characterized in that** the contact pins (25) are electrically insulated from one another in a pin holder (27) which is accommodated in the cutout (13) in the outwardly projecting extension (12).

7. Magnet assembly according to Claim 6, **characterized in that** the pin holder (27) is produced from an electrically insulating material.

8. Use of a magnet assembly according to one of Claims 1 to 7 for operating a closing element in a solenoid valve.

9. Use according to Claim 8, **characterized in that** the solenoid valve is employed in a fuel injector.

## Revendications

1. Module magnétique pour une soupape magnétique, comprenant un pôle intérieur (11) et un pôle extérieur (22) ainsi qu'une bobine (21), la bobine (21) étant disposée entre le pôle intérieur (11) et le pôle extérieur (22), **caractérisé en ce que** la bobine (21) est enroulée directement sur le pôle intérieur (11) pourvu d'un revêtement électriquement isolant.

2. Module magnétique selon la revendication 1, **caractérisé en ce que** le revêtement est un revêtement en parylène.

3. Module magnétique selon l'une quelconque des revendications 1 et 2, **caractérisé en ce qu'**un élargissement saillant vers l'extérieur (12) est réalisé sur le pôle intérieur (11), lequel est pressé dans le pôle extérieur (22), de sorte qu'une fente (23) soit formée entre la bobine (21) et le pôle extérieur (22).

4. Module magnétique selon la revendication 3, **caractérisé en ce que** dans l'élargissement (12) saillant vers l'extérieur sur le pôle intérieur (11) est réalisé un évidement (13) dans lequel est reçu au moins un fanion de contact (24).

5. Module magnétique selon la revendication 4, **caractérisé en ce que** les fanions de contact (24) sont connectés chacun à une broche de contact (25), par le biais de laquelle le module magnétique (20) peut être mis en contact avec une source de tension.

6. Module magnétique selon la revendication 5, **caractérisé en ce que** les broches de contact (25) sont reçues dans un support de broches (27) de manière isolées électriquement les unes des autres, le support de broches (27) étant reçu dans l'évidement (13) de l'élargissement (12) saillant vers l'extérieur.

7. Module magnétique selon la revendication 6, **caractérisé en ce que** le support de broches (27) est fabriqué en un matériau électriquement isolant.

8. Utilisation du module magnétique selon l'une quelconque des revendications 1 à 7 pour l'actionnement d'un élément de fermeture dans une électrovanne.

9. Utilisation selon la revendication 8, **caractérisée en ce que** l'électrovanne est utilisée dans un injecteur de carburant.
